# EUROPÄISCHE PATENTSCHRIFT

(11) **EP 1 953 029 B1**
(45) Veröffentlichungstag und Bekanntmachung des Hinweises auf die Patenterteilung: **22.08.2012**
(21) Anmeldenummer: 08000948.3
(22) Anmeldetag: 18.01.2008
(51) Int. Cl.: B60K 35/00, B60K 37/06, G01C 21/36

(54) **Anzeige- und Bedienvorrichtung mit verbesserter Auswahlmöglichkeit eines aktuellen Anzeige- und Bedienkontextes**
Display and operational device with improved option possibilities of up-to-date display and operational contexts
Dispositif d'affichage et de commande doté de possibilités de sélection améliorées d'un contexte d'affichage et d'utilisation actuel

(30) Priorität: 01.02.2007 DE 102007005026
(43) Veröffentlichungstag der Anmeldung: 06.08.2008
(73) Patentinhaber: Volkswagen Aktiengesellschaft, 38440 Wolfsburg (DE)
(72) Erfinder: Wäller, Christoph, 38102 Braunschweig (DE); Wengelnik, Heino, 38442 Wolfsburg (DE); Thom, Mathias, 38106 Braunschweig (DE)

(56) Entgegenhaltungen:
- EP-A2- 1 442 920
- EP-A2- 1 508 480
- WO-A1-99/35008
- DE-A1- 19 941 947

## Beschreibung

Die Erfindung betrifft eine Anzeige- und Bedienvorrichtung, die eine Anzeigevorrichtung, eine mit der Anzeigevorrichtung verknüpfte Steuereinheit zum Umsetzen einer Benutzerschnittstelle, wobei die Benutzerschnittstelle mindestens zwei Anzeige- und/oder Bedienkontexte umfasst, und mindestens eine Bedieneinrichtung zum Auswählen eines der mindestens zwei Anzeige- und/oder Bedienkontexte umfasst, wobei die Steuereinheit die grafische Darstellung von zu dem ausgewählten der mindestens zwei Anzeige- und/oder Bedienkontexte gehörigen Informationen auf einer Anzeigefläche der Anzeigevorrichtung steuert.

In modernen Kraftfahrzeugen werden heute häufig so genannte Multifunktionsanzeige- und Bedienvorrichtungen verwendet, die sowohl zum Anzeigen von Informationen über Fahrzeugsysteme, Fahrzeugfunktionen, fahrzeuginterne und/oder -externe Dienste usw. verwendet werden, als auch als kontextabhängige Bedienvorrichtung genutzt werden. Hierfür ist die Anzeigefläche vorzugsweise mit einem positionsempfindlichen Sensor gekoppelt. Die Anzeigevorrichtung ist beispielsweise als Touchscreen ausgebildet, auf dem virtuelle Bedienelemente eingeblendet werden. Ebenso kann die Anzeigevorrichtung, auch wenn sie nicht als Touchscreen ausgebildet ist, verwendet werden, um anderen um die Anzeigevorrichtung herum oder beabstandet von der Anzeigevorrichtung angeordneten Bedienelementen jeweils eine Funktion, Funktionalität usw. zuzuordnen. Dies bedeutet, dass auf der Anzeigefläche eine so genannte Bedienelementzuordnung eingeblendet ist, die die Funktion, Funktionalität usw. für ein zugeordnetes Bedienelement angibt.

Um eine übersichtliche und verständliche Benutzerschnittstelle für einen Fahrer und/oder Beifahrer eines Kraftfahrzeugs zu schaffen, ist es vorgesehen, die einzelnen Funktionen, Funktionalitäten usw. in Anzeige- und Bedienkontexte zu gliedern. In einem Anzeige- und Bedienkontext können somit einzelne Funktionen zusammengefasst werden, die beispielsweise ein bestimmtes Fahrzeugsystem charakterisieren und/oder zu dessen Bedienung notwendig sind. In einem Anzeigemodus werden hierbei vorzugsweise Informationen über das/die jeweilige mit einem Anzeige- und Bedienkontext korrespondierende Fahrzeugsystem, Fahrzeugfunktion usw. dargestellt. In einem zweiten Modus kann vorzugsweise eine Bedienung des entsprechenden Fahrzeugsystems bzw. der hiermit verknüpften Funktionen erfolgen. Ein solcher Modus wird auch als Bedienmodus bezeichnet. Hierfür werden vorzugsweise Bedienelemente und/oder Bedienelementzuordnungen auf der Anzeigefläche dargestellt.

Aus der DE 102 31 806 A1 sind ein Verfahren und eine Vorrichtung zur Bedienung von Funktionsgruppen und/oder Funktionen mit einer Anzahl von Bedienelementen bekannt, wobei die Bedienelemente Anzeigefelder aufweisen. Dort ist vorgesehen, dass auf den Anzeigefeldern der Bedienelemente bedienebenenabhängig unterschiedliche Funktionsgruppen- und/oder Funktionszuweisungen generiert werden. Dies bedeutet, dass den einzelnen Bedienelementen kontextabhängig unterschiedliche Funktionen und/oder Funktionsgruppen zugeordnet werden können. Hierdurch ist es möglich, mit einer relativ geringen Anzahl von Bedienelementen eine Vielzahl von Funktionen und Funktionalitäten auszulösen.

Aus der WO 2005/066750 A1 ist ein Bediensystem für ein Fahrzeug mit einer Bildschirmanzeige mit mehreren Darstellungsbereichen zur Darstellung von Einträgen einer Menüstruktur mit mehreren Menüebenen, einem manuellen Betätigungsmittel zur Auswahl und/oder Aktivierung von mindestens einem Eintrag in einer aktuellen Menüebene aus der Menüstruktur, Sprachsteuermittel für eine redundante Auswahl und/oder Aktivierung von mindestens einem Eintrag aus der Menüstruktur, der gleichzeitig ein Schlüsselwort für die Sprachsteuerungsmittel bildet, bekannt. Dort ist vorgesehen, dass die Einträge der Menüstruktur in verschiedene Gruppen aufgeteilt sind, wobei eine erste Gruppe Einträge umfasst, die nur mit dem manuellen Betätigungsmittel auswählbar und/oder selektierbar sind und wobei eine zweite Gruppe Einträge umfasst, die mit dem manuellen Betätigungsmittel und/oder den Sprachsteuerungsmitteln auswählbar und/oder aktivierbar sind, und wobei die zweite Gruppe in mindestens zwei Begriffsgruppen aufgeteilt ist, die durch einfache Regeln festlegbar sind und die bestimmen, welche Schlüsselworte zur Menüführung aktuell eingebbar sind.

Aus der WO 99/35008 ist ein Automobilcomputersystem mit einem Computer bekannt, das ein Betriebssystem mit einer offenen Plattform ausführt, die so konfiguriert ist, dass mehrere Anwendungen, einschließlich Anwendungen, die von einem Nutzer installiert sind, unterstützt werden. Das System umfasst eine Anwenderschnittstelle, die von einem Nutzer des Automobils betrachtet werden kann. Eine Vielzahl von Anwendungspiktogrammen können quer über die visuelle Nutzerschnittstelle gescrollt werden. Die Anwendungspiktogramme korrespondieren mit Anwendungen, die das Betriebssystem unterstützt. Die Nutzerschnittstelle weist eine feste Fokusposition auf, wobei jedes der Anwendungspiktogramme, das in die festgelegte Fokusposition gescrollt wird, fokussiert wird und aktiviert werden kann, um die dazugehörige Anwendung auszuwählen.

In der EP 1 508 480 A2 wird eine Anzeigerichtung mit einem Bildschirm und einem die Bildschirmanzeige steuernden Multifunktionsschalter, insbesondere für ein Motorrad, beschrieben. Der Multifunktionsschalter ist auf einem Fahrzeuglenker in unmittelbarer Nähe eines Griffstücks angeordnet. Dadurch kann der Fahrer den Multifunktionsschalter mit dem Daumen betätigen, ohne die Hand vom Griffstück zu nehmen. Der Multifunktionsschalter steuert die Anzeige eines Bildschirms, der vor dem Fahrer in Fahrtrichtung angeordnet ist. Beschrieben ist eine Ausführungsform, bei der der Multifunktionsschalter ein schwenkbares Betätigungsglied aufweist, das der Fahrer mit seinem Daumen antippen kann und so durch die einzelnen Funktionen auf dem Bildschirm blättert. Erscheint die gewünschte Funktion, drückt er das Betätigungsglied und wählt die Funktion aus.

Aus der EP 1 442 920 A2 (beinhaltet die Merkmale des Oberbegriffs des unabhängigen Anspruchs 1) sind ein Verfahren und eine Vorrichtung für einen Funktionszugriff in einem Kraftfahrzeug bekannt. Diese umfassen mindestens ein Komfort-System, ein SteuerSystem, ein Unterhaltungs-System und ein Kommunikations-System und mindestens eine Mensch-Maschine-Schnittstelle, wobei die Mensch-Maschine-Schnittstelle mit mindestens einer Eingabeeinheit, mindestens einer Ausgabeeinheit und mindestens einer Datenbank für Funktionen ausgebildet ist, an der Mensch-Maschine-Schnittstelle mindestens eine Ambitioniert-Arbeitsumgebung erzeugt wird und aus der Ambitioniert-Arbeitsumgebung über eine Menüstruktur und/oder eine Suchumgebung auf die Funktionen der Datenbank zugegriffen wird, an der Mensch-Maschine-Schnittstelle mindestens eine variable Arbeitsumgebung erzeugt wird, wobei ein Zugriff auf Funktionen aus der Arbeitsumgebung beschränkt ist und die Ausgabeeinheit mindestens an die Funktionen der Arbeitsumgebung angepasst wird.

Mit den bekannten Vorrichtungen und Verfahren ist es zwar möglich, menügestützt mehrere Fahrzeugsysteme zu bedienen. Hierfür ist jedoch jeweils mindestens eine Auswahl aus einem Menü erforderlich, um die Informationen zu dem ausgewählten Fahrzeugsystem, das zu dem entsprechenden Menüeintrag zugeordnet ist, angezeigt zu erhalten. Werden hingegen Informationen über ein Fahrzeugsystem angezeigt, die mehr als eine Benennung des Fahrzeugsystems umfassen, so ist kein einfacher Wechsel zu einer Anzeige eines anderen gewünschten Fahrzeugsystems möglich, ohne eine Anwahl über ein Menü auszuführen.

Aufgabe der Erfindung ist es, eine Anzeige- und Bedienvorrichtung zu schaffen, mit der eine einfachere, insbesondere bedienhandlungsarme, und intuitivere Benutzung von unterschiedlichen Fahrzeugsystemen und/oder Diensten und/oder Funktionen möglich ist, die in unterschiedliche Anzeige- und Bedienkontexte unterteilt sind.

Die Aufgabe wird erfindungsgemäß durch eine Vorrichtung mit den Merkmalen des Patentanspruchs 1 gelöst. Vorteilhafte Ausgestaltungen ergeben sich aus den Unteransprüchen.

Bei einer eingangs genannten Vorrichtung ist hierfür vorgesehen, die Anzeige- und Bedienkontexte in einer geschlossenen Kette miteinander zu verknüpfen, wobei eine entlang der Kette orientierte Bedienungsrichtung existiert und mittels der Bedieneinrichtung ein Bedienwunsch für eine Bedienung entlang der Bedienrichtung erfassbar ist und ein neuer ausgewählter Anzeige- und Bedienkontext derjenige der mindestens zwei Anzeige- und Bedienkontexte ist, der in Bedienrichtung benachbart zu dem gegenwärtig ausgewählten Bedienkontext in der Kette angeordnet ist. Die Anzeige- und Bedienkontexte, die existieren, werden somit in einer geschlossenen Kette verortet. Dieses ist gleichbedeutend mit einer Anordnung der Anzeige- und Bedienkontexte in einer unendlichen, sich wiederholenden Reihe. Durch die Festlegung mindestens einer Bedienrichtung, die entlang der Kette bzw. der unendlichen Reihe orientiert ist, ist es möglich, über eine Bedieneinrichtung einen Bedienwunsch für eine Bedienung entlang der Bedienrichtung zu erfassen. Hierüber ist festgelegt, welches der neue ausgewählte Anzeige- und Bedienkontext ist. Dieses ist jeweils der Anzeige- und Bedienkontext, der in der geschlossenen Kette in Bedienrichtung benachbart zu dem Anzeige- und Bedienkontext angeordnet ist, der im Zeitpunkt ausgewählt ist, in dem die neue Auswahl vorgenommen wird. Hierdurch wird eine einfache und intuitive Möglichkeit geschaffen, gezielt zwischen den einzelnen Anzeige- und Bedienkontexten zu wechseln. Hierfür ist kein gesondertes Menü erforderlich, so dass auf der Anzeige- und Bedienvorrichtung fortwährend Informationen eines ausgewählten Anzeige- und Bedienkontextes angezeigt werden. Unter angezeigten Informationen werden hier Informationen verstanden, die nicht nur eine Benennung des Fahrzeugsystems beispielsweise über einen Text oder ein Symbol umfassen. Vielmehr liefern Sie nutzbare Inhalte über das Fahrzeugsystem oder für dessen Bedienung beispielsweise in Form von Bedienoptionen usw. Sind die Anzeige- und Bedienkontexte beispielsweise verschiedenen Fahrzeugsystemen zugeordnet, die über die Anzeige- und Bedienvorrichtung bedient werden können, so werden jeweils die Informationen, die das zugehörige Fahrzeugsystem charakterisieren und/oder Bedienelemente, die eine Bedienung des entsprechenden Fahrzeugsystems ermöglichen, auf der Anzeigefläche dargestellt.

Eine bevorzugte Ausführungsform der Erfindung sieht vor, dass ein Kontextdarstellungsfeld vorgesehen ist, in dem die Informationen zu genau einem der mindestens zwei Anzeige- und Bedienkontexte in einer Kontextdarstellung dargestellt sind. In einer solchen Kontextdarstellung sind somit die Informationen zusammengefasst, die zu dem aktuell ausgewählten Anzeige- und Bedienkontext gehören. Die Form der Kontextdarstellung für einen Anzeige- und Bedienkontext kann wiederum fahrzeugsystem- und/oder fahrsituationsabhängig sein. Dies bedeutet, dass die dargestellten Informationen beispielsweise von einem Zustand und/oder Status des Fahrzeugsystems abhängen können, über das in diesem Anzeige- und Bedienkontext Informationen dargestellt werden. Ist beispielsweise eines der Fahrzeugsysteme, das über die Anzeige- und Bedienvorrichtung in einem Anzeige- und Bedienkontext bedienbar ist, ein CD-Player, so kann die Kontextdarstellung während der Wiedergabe eines CD-Titels beispielsweise einen Namen der CD, einen aktuell wiedergegebenen Musiktitel, einen Interpreten, eine Abspieldauer in Form eines Verlaufsdiagramms und/oder alphanumerischen Angaben umfassen. Wird hingegen aktuell kein Musiktitel über den CD-Player wiedergegeben, so können in der entsprechenden Kontextdarstellung beispielsweise der CD-Name, ein Interpret, eine Gesamtspieldauer und einzelne oder alle auf der CD auswählbaren Musiktitel dargestellt sein.

Um ein intuitives Bedienen der Anzeige- und Bedienvorrichtung zu ermögliche, ist bei einer bevorzugten Ausführungsform vorgesehen, dass zu der mindestens einen Bedienrichtung eine Anzeigewechselrichtung existiert und eine Änderung von der gegenwärtigen Kontextdarstellung auf eine neue Kontextdarstellung in der Weise erfolgt, dass die neue Kontextdarstellung entlang der Anzeigewechselrichtung in das Kontextdarstellungsfeld geschoben wird und hierbei die gegenwärtige Kontextdarstellung aus dem Kontextdarstellungsfeld ebenfalls entlang der Anzeigewechselrichtung herausgeschoben wird. Hierdurch wird für den Nutzer der visuelle Eindruck verstärkt, dass durch ein Auswählen über einen Bedienwunsch in der Bedienrichtung die in der Kette angeordneten Anzeige- und Bedienkontexte gemeinsam entlang dieser Kette in Bedienrichtung quasi relativ zu dem Kontextdarstellungsfeld bewegt werden. Das Kontextdarstellungsfeld kann so ausgestaltet sein, dass es die gesamte Anzeigefläche umfasst. In der Regel wird jedoch das Kontextdarstellungsfeld nur einen Teilbereich der Anzeigefläche überdecken. Insbesondere ist es vorteilhaft, einen Statusbereich, der vorzugsweise an einem unteren Rand der Anzeigefläche angeordnet ist, vorzusehen. In diesem können einige grundlegende Statusinformationen für den Fahrer und/oder Beifahrer ständig sichtbar dargestellt werden.

Um eine Orientierung innerhalb der verketteten Anzeige- und Bedienkontexte zu erleichtern, ist bei einer Ausführungsform der Erfindung vorgesehen, dass ein Kontextkennungsfeld, vorzugsweise auf der Anzeigefläche, existiert, in dem für jeden der mindestens zwei Anzeige- und Bedienkontexte eine zugeordnete Kontextkennung dargestellt ist, wobei die zu dem gegenwärtig ausgewählten Kontext zugeordnete Kontextkennung visuell hervorgehoben ist. Ein solches Kontextkennungsfeld ist vorzugsweise ebenfalls in dem Statusbereich bzw. einem Statusfeld der Anzeigefläche angeordnet. Alternativ kann das Kontextkennungsfeld jedoch auch getrennt und/oder benachbart von der Anzeigefläche ausgebildet sein, die zur Darstellung des Kontextdarstellungsfeldes genutzt wird. Indem für jeden Anzeige- und Bedienkontext eine Kontextkennung vorgesehen ist, ist es für einen Nutzer einfach möglich, den gewünschten Anzeige- und/oder Bedienkontext aufzufinden. Da zu jedem Anzeige- und Bedienkontext eine Kontextkennung vorhanden ist, wird es einem Nutzer erleichtert, wenn er eine bestimmte Funktion sucht, den Anzeige- und Bedienkontext aufzufinden, dem diese Funktion zugeordnet ist.

Eine Kontextkennung ist eine Kennung, die den jeweiligen Anzeige- und Bedienkontext beschreibt und/oder charakterisiert. Eine Kontextkennung kann als alphanumerischen Zeichen gebildet sein. Vorzugsweise wird jedoch eine Kontextkennung als Symbol und/oder Piktogramm ausgebildet sein. Hierdurch wird es einem Nutzer erleichtert, den Anzeige- und Bedienkontext auf einfache Weise zu erfassen. Durch die Verwendung eines Symbols und/oder Piktogramms ist es einem Nutzer möglich, ohne eine Kenntnis von Begrifflichkeiten einen Anzeige- und Bedienkontext zu identifizieren und zu erfassen. Ferner wird ein geringerer Platzbedarf zur Darstellung der Kontextkennung benötigt. Soll beispielsweise ein Anzeige- und Bedienkontext Telefonieren über eine Kontextkennung beschrieben werden, so reicht beispielsweise eine Darstellung eines Telefonhörers, um diese Information einem Nutzer zu vermitteln. Wird hingegen eine alphanumerische Kontextkennung verwendet, so werden mehrere alphanumerische Zeichen benötigt, um das Wort Telefon oder eine Abkürzung hiervon darzustellen. Die Darstellung des Telefonhörers kann beispielsweise in der Größe eines Buchstabens erfolgen und immer noch durch einen Nutzer zuverlässig erkannt und identifiziert werden.

Eine Orientierung innerhalb der verketteten Anzeige- und Bedienkontexte wird sehr stark erleichtert, wenn die Kontextkennungen in dem Kontextkennungsfeld in der Reihenfolge benachbart zueinander entlang der Anzeigewechselrichtung angeordnet sind, in der die Anzeige- und Bedienkontexte zueinander benachbart in der Kette entlang der Bedienrichtung angeordnet sind. Bei einer solchen bevorzugten Ausführungsform der Erfindung kann der Nutzer auf einfache Weise feststellen, an welcher Stelle innerhalb der Verkettung sich der Anzeige- und Bedienkontext relativ zu dem Bedienkontext befindet, der aktuell ausgewählt ist und dessen Kontextkennung visuell hervorgehoben ist.

Die Orientierung wird darüber hinaus noch bei Ausführungsformen erleichtert, bei denen jede der Kontextkennungen jeweils immer an derselben Stelle innerhalb des Kontextkennungsfelds dargestellt ist.

Bei einer Ausführungsform, bei der die Kontextkennungen jeweils immer an derselben Stelle innerhalb des Kontextkennungsfeldes entlang der Auswechselrichtung in einer Reihe dargestellt sind, wird die visuelle Hervorhebung sich bei einer Auswahl eines neuen Anzeige- und Bedienkontextes, die einen neuen Anzeige- und Bedienkontext in Bedienrichtung entlang der Verkettung auswählt, entlang der Anzeigewechselrichtung zu der benachbarten Kontextkennung "bewegen". Ist die Kontextkennung in Auswahlwechselrichtung betrachtet die zuletzt dargestellte Kontextkennung im Kontextkennungsfeld, so wandert die Hervorhebung bei einer Auswahl in Bedienrichtung zu der ersten Kontextkennung im Kontextkennungsfeld, betrachtet in Auswahlwechselrichtung. Eine Anordnung der Kontextkennungen in einem Kreis oder entlang einer anderen geschlossenen Kontur ist auch möglich. Hierbei wird die geschlossene Kette als solches auch grafisch abgebildet, was die intuitive Bedienung erleichtert.

Eine andere Ausführungsform kann vorsehen, dass die Kontextkennungen bei einer Auswahl eines neuen Anzeige- und Bedienkontextes sich in Anzeigewechselrichtung relativ zu einem festen Fokus bewegen, der mit der visuellen Hervorhebung der zu dem ausgewählten Anzeige- und Bedienkontext zugehörigen Kontextkennung zusammenfällt. In diesem Fall ist der Fokus jeweils an derselben Stelle in dem Kontextkennungsfeld angeordnet. Die einzelnen Kontextkennungen bewegen sich bei der Auswahl relativ zu diesem Fokus. Eine solche Ausführungsform bietet den Vorteil, dass jeweils die beiden benachbarten Anzeige- und Bedienkontexte zu dem aktuell ausgewählten Bedienkontext auch bei den Kontextkennungen als benachbarte Kontextkennungen dargestellt sind.

Bei einer solchen Ausführungsform ist bevorzugt die entlang der Anzeigewechselrichtung vor der Auswahl eines neuen Anzeige- und Bedienkontextes zuletzt angeordnete Kontextkennung nach dem Wechsel der Darstellung als erste Kontextkennung entlang der Anzeigewechselrichtung angeordnet, wenn eine Auswahl in Bedienrichtung vorgenommen wird.

Um ein einfaches und schnelles Navigieren und Wechseln zwischen den einzelnen Anzeige- und Bedienkontexten zu ermöglichen, wird es bevorzugt, sich sowohl entlang der Bedienrichtung als auch entlang einer entgegengesetzten Bedienrichtung bei einer Auswahl bewegen zu können. Daher sieht eine besonders bevorzugte Ausführungsform vor, dass eine zu der Bedienrichtung entgegengesetzte Bedienrichtung existiert und die Bedieneinrichtung so ausgestaltet ist, dass zusätzlich ein entgegengesetzter Bedienwunsch für eine Bedienung entlang der entgegengesetzten Bedienrichtung erfassbar ist und beim Erfassen eines entgegengesetzten Bedienwunsches der neu ausgewählte Anzeige- und Bedienkontext derjenige der mindestens zwei Anzeige- und Bedienkontexte ist, der in entgegengesetzter Bedienrichtung benachbart zu dem gegenwärtig ausgewählten Bedienkontext in der Kette angeordnet ist. Eine Auswahl und ein Wechseln von einem Anzeige- und Bedienkontext zu einem nächsten Anzeige- und Bedienkontext sind somit in beiden einander entgegengesetzten Richtungen möglich. Um einen Anzeige- und Bedienkontext auszuwählen, ist es somit auf einfache Weise möglich, zu dem zuvor ausgewählten Anzeige- und Bedienkontext zurückzukehren, ohne vorher alle übrigen Anzeige- und Bedienkontexte ausgewählt haben zu müssen.

Auf besonders bevorzugte Weise kann eine solche einfache Navigation mit einer Ausführungsform der Erfindung umgesetzt werden, bei der die Bedieneinrichtung ein Bedienrichtung-Bedienelement und ein Entgegengesetzte-Bedienrichtung-Bedienelement umfasst, die entlang der Anzeigewechselrichtung so angeordnet sind, dass ein Verbindungsvektor von dem Entgegengesetzte-Bedienrichtung-Bedienelement zu dem Bedienrichtung-Bedienelement parallel zu der Anzeigewechselrichtung ausgerichtet ist und eine Orientierung aufweist, die mit der Anzeigewechselrichtung übereinstimmt. Dies bedeutet, dass ein Betätigen des Bedienrichtung-Bedienelements einen Wechsel des Anzeige- und Bedienkontextes in der Bedienrichtung und eine grafische Darstellung eines Wechsels entlang der Anzeigewechselrichtung auslöst. Eine entgegengesetzte Bedienrichtung wird ausgelöst, indem das Entgegengesetzte-Bedienrichtung-Bedienelement betätigt wird.

Ein klarer Bezug zu der jeweiligen Richtung, in der die Bedienung stattfindet, wird bei einer Ausführungsform erreicht, bei der das Bedienrichtung-Bedienelement und das Entgegengesetzte-Bedienrichtung-Bedienelement auf entgegengesetzten Seiten der Anzeigefläche angeordnet sind, so dass das Bedienrichtungs-Bedienelement sich in Anzeigewechselrichtung von der Anzeigefläche befindet.

Nachfolgend wird eine bevorzugte Ausführungsform der Erfindung unter der Bezugnahme auf eine Zeichnung näher erläutert. Hierbei zeigen:
- Fig. 1: eine schematische Ansicht einer Anzeige- und Bedienvorrichtung für ein Kraftfahrzeug;
- Fig. 2: eine exemplarische Ansicht einer Anzeigefläche;
- Fig. 3: eine Darstellung mehrerer Ansichten einer Anzeigefläche zur Darstellung der Verkettung von Anzeige- und Bedienkontexten;
- Fig. 4a-8a: Ansichten der Anzeigefläche, die unterschiedliche Anzeigedarstellungen verschiedener Anzeige- und Bedienkontexte nach Fig. 3 detaillierter darstellen;
- Fig. 4b-8b: Ansichten der Anzeigefläche, die Bediendarstellungen wiedergeben, die mit den Anzeige- und Bedienkontexten der Ansichten nach Fig. 4a-8a korrespondieren;
- Fig. 9a: eine Ansicht der Anzeigefläche mit einer Anzeigedarstellung eines Bedienkontextes ähnlich zu dem nach Fig. 7a;
- Fig. 9b-9g: Ansichten der Anzeigefläche, die Anzeige- und Bediendarstellungen von kontextübergreifenden Einblendungen darstellen.
- Fig. 10a, 10b: Darstellungen, die zeigen, wie eine Änderung der Kontextdarstellung bei einem Wechsel des Anzeige- und Bedienkontextes abläuft.

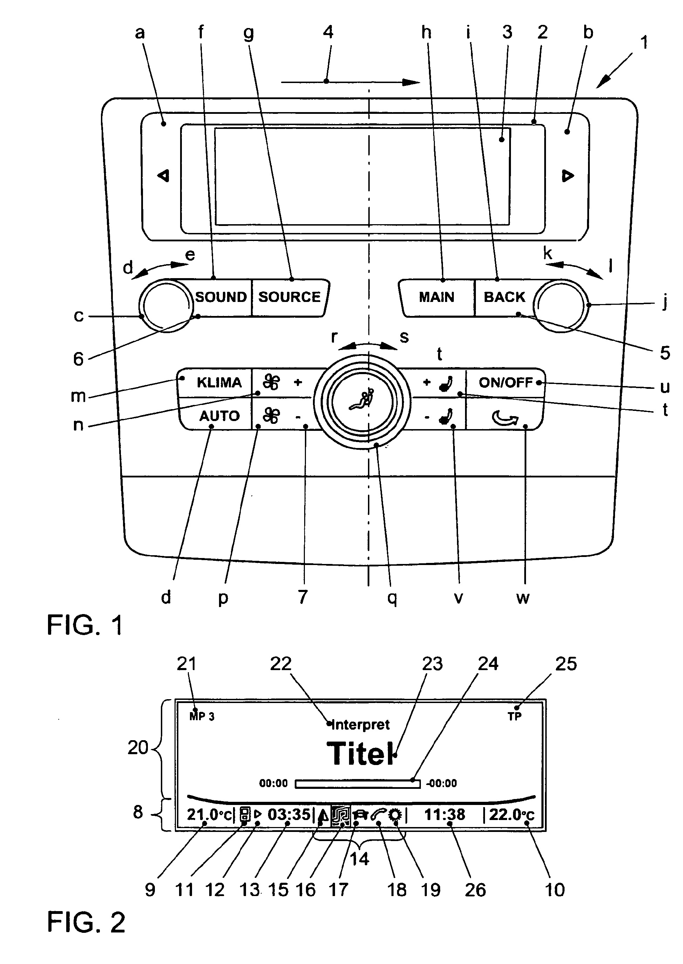

In Fig. 1 ist eine Anzeige- und Bedienvorrichtung dargestellt. Die Anzeige- und Bedienvorrichtung 1 umfasst eine Anzeigevorrichtung 2. Auf einer Anzeigefläche 3 der Anzeigevorrichtung 2 können grafisch Informationen wiedergegeben werden. Die Anzeigevorrichtung 2 ist hierfür mit einer Steuereinheit (nicht dargestellt) gekoppelt, die mittels der grafischen Informationen vorzugsweise eine Benutzerschnittstelle umsetzt. Hierfür ist die Steuereinheit vorzugsweise mit einer Speichervorrichtung (nicht dargestellt) gekoppelt, in der die Software abgelegt ist, die eine Umsetzung der Benutzerschnittstelle ermöglicht. Ferner sind in dem Speicher vorteilhafterweise die notwenigen grafischen Informationen zum Erzeugen der Darstellungen auf der Anzeigefläche 3 der Anzeigevorrichtung 2 gespeichert. Die Anzeigevorrichtung 2 ist bevorzugt als Touchscreen ausgebildet. Rechts benachbart von der Anzeigefläche 3 ist eine Pfeiltaste rechts b angeordnet. Links der Anzeigefläche 3 ist eine Pfeiltaste links a angeordnet. Die Pfeiltaste links a und die Pfeiltaste rechts b sind somit an entgegengesetzten Seiten der Anzeigefläche 3 angeordnet, wobei die Pfeilspitzen der Pfeiltasten links und rechts a, b jeweils von der Anzeigefläche weg weisen. Ein Pfeil 4 deutet die Richtung einer Anzeigewechselrichtung an, deren Bedeutung weiter unten erläutert wird. Verbindet man die Pfeiltaste links a mit der Pfeiltaste rechts b, so ist der sich ergebende Vektor parallel zu der Anzeigewechselrichtung und weist dieselbe Orientierung wie diese auf. Unterhalb der Anzeigevorrichtung 2 sind ein Hauptbedienfeld 5, ein Audiobedienfeld 6 und ein Klimabedienfeld 7 angeordnet. Diese umfassen jeweils mehrere Bedienelemente, die weiter unten näher erläutert werden.

In Fig. 2 ist eine beispielhafte Ansicht der Anzeigefläche im Betrieb der Anzeige- und Bedienvorrichtung 1 gezeigt. In einem unteren Bereich der Anzeigefläche 3 ist ein Statusfeld 8 dargestellt. Am linken Rand 9 und rechten Rand 10 des Statusfelds 8 sind jeweils Temperaturangaben dargestellt. Die Temperaturangaben geben jeweils eine gewünschte Temperatur in der jeweils entsprechenden Fahrzeughälfte wieder. Dies bedeutet, dass auf der linken Fahrzeugseite eine Temperatur von 21 °C und auf der rechten Seite des Fahrzeugs eine Temperatur von 20 °C im Innenraum vorherrschen sollen. Ein Quellensymbol 11 gibt eine Schallquelle an. In dem dargestellten Beispiel ist die Schallquelle ein MP3-Player. Ein Dreieck 12 gibt einen so genannten Wiedergabestatus der Audioanlage an. Das Dreieck 12 deutet an, dass ein Titel wiedergegeben wird. Eine Wiedergabezeitangabe 13 gibt eine Abspieldauer, in diesem Falle einer Play-Liste, die aus mehreren Titeln besteht, an. Ebenso gut könnte eine Abspieldauer des aktuell wiedergegebenen Titels oder die Gesamtabspieldauer einer CD usw. angegeben sein.

In einer Mitte des Statusfelds 8 ist ein Kontextkennungsfeld 14 angeordnet. In dem Kontextkennungsfeld 14 sind Kontextkennungen 15, 16, 17, 18, 19 angeordnet. Von links nach rechts sind in dem Kontextkennungsfeld 14 eine Kontextkennung Navigation 15, eine Kontextkennung Audio 16, eine Kontextkennung Fahrzeug 17, eine Kontextkennung Telefon 18 und eine Kontextkennung Allgemein 19 dargestellt. Die Kontextkennung Audio 16 ist visuell hervorgehoben. Hierzu korrespondiert die grafische Anzeige oberhalb des Statusfelds 8 in einem so genannten Kontextdarstellungsfeld 20. In dem Kontextdarstellungsfeld 20 sind Informationen zu einem Anzeige- und Bedienkontext in Form einer Kontextdarstellung wiedergegeben. Die Kontextdarstellung eines Anzeige- und Bedienkontextes kann hierbei situationsabhängig sein. Dies bedeutet, dass die wiedergegebenen Informationen von dem Zustand des Fahrzeugs bzw. eines Fahrzeugsystems, eines Fahrzeugdienstes, einer Fahrzeugfunktion usw. abhängen kann, über die Informationen in der Kontextdarstellung wiedergegeben werden bzw. die über gegebenenfalls eingeblendete Bedienelemente bzw. Bedienelementezuordnungen oder weitere Bedienelemente bedienbar sind, wie weiter unten erläutert wird. Bei der Kontextdarstellung nach Fig. 2 wird in einer oberen linken Ecke eine alphanumerische Angabe 21 über die Schallquelle wiedergegeben. Ferner sind ein Interpret 22, ein Titel eines Liedes 23 sowie eine Verlaufsanzeige 24 dargestellt. In einer oberen rechten Ecke ist mittels einer weiteren alphanumerischen Angabe 25 angezeigt, dass ein so genannter "Trafficpilot" aktiv ist. Dies bedeutet, dass im Hintergrund ein Verkehrsfunksender hinsichtlich einer Ausstrahlung von Verkehrsmeldungen überwacht wird. Zusätzlich ist in dem Statusfeld 8 eine Uhrzeitangabe 26 umfasst. In der gezeigten Kontextdarstellung sind keine betätigbaren Bedienelemente dargestellt oder für eine Bedienung hervorgehoben. Eine solche Kontextdarstellung wird hier als Anzeigedarstellung bezeichnet.

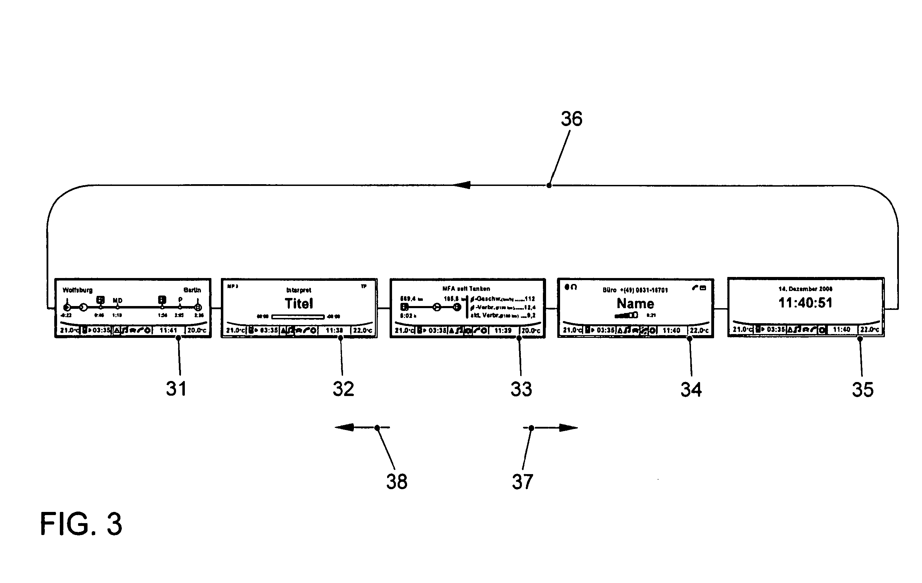

Die Anzeige- und Bedienvorrichtung 1 umfasst eine Steuereinheit, die die Anzeigevorrichtung steuert, um eine Benutzerschnittstelle umzusetzen. Die Benutzerschnittstelle ist so ausgestaltet, dass unterschiedliche Anzeige- und Bedienkontexte in einer geschlossenen Kette miteinander verkettet sind. Dies ist exemplarisch in Fig. 3 dargestellt. In Fig. 3 sind unterschiedliche Ansichten 31-35 der unterschiedlichen Anzeige- und Bedienkontexte zu einer geschlossenen Kette 36 verknüpft. Bezüglich der Kette ist eine Bedienrichtung 37 festgelegt. Entsprechend existiert eine entgegengesetzte Bedienrichtung 38.

Bei der Anzeige- und Bedienvorrichtung 1 nach Fig. 1 kann zwischen den unterschiedlichen Anzeige- und Bedienkontexten gewechselt werden, indem ein Bedienwunsch über die Pfeiltaste links a oder die Pfeiltaste rechts b erfasst wird. Die Bedienrichtung 37 der miteinander verketteten Anzeige- und Bedienkontexte ist mit der Pfeiltaste rechts b verknüpft, so dass die Pfeiltaste rechts b auch als Bedienrichtung-Bedienelement bezeichnet wird. Entsprechend ist die Pfeiltaste links a ein Entgegengesetzte-Bedienrichtung-Bedienelement. Hieraus ergibt sich, dass die Bedienrichtung mit der Anzeigewechselrichtung, die mittels des Pfeils 4 angedeutet ist, übereinstimmt.

Die Anzeige- und Bedienkontexte, die miteinander verkettet sind, umfassen einen Navigationskontext, der in der Ansicht 31 dargestellt ist, einen Audiokontext, der in der Ansicht 32 dargestellt ist, einen Fahrzeugkontext, der in der Ansicht 33 dargestellt ist, einen Telefonkontext, der in Ansicht 34 dargestellt ist, und einen allgemeinen Kontext, der in Ansicht 35 dargestellt ist. Die unterschiedlichen soeben angegebenen Anzeige- und Bedienkontexte sind in der angegebenen Reihenfolge entlang der Bedienrichtung 37 in der Kette 36 miteinander verknüpft.

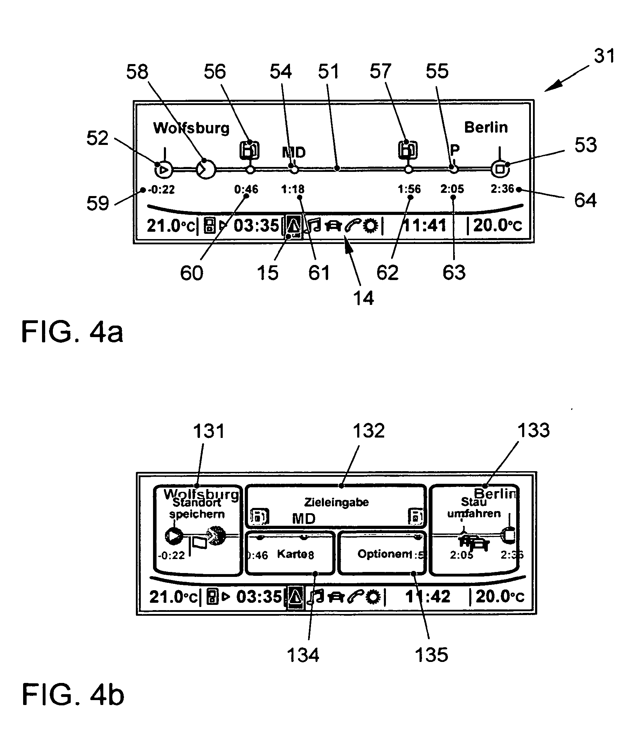

Die einzelnen Ansichten 31-35 sind in größeren Details in Fig. 4a-8a dargestellt. Dargestellt sind in den Fig. 4a-8a jeweils Anzeigedarstellungen der entsprechenden Anzeige- und Bedienkontexte. Im Navigationskontext ist schematisch eine Fahrstrecke 51 von einem Ausgangspunkt 52 Wolfsburg zu einem Zielpunkt 53 Berlin schematisch dargestellt. Ferner sind einzelne Wegpunkte 54, 55 eingezeichnet, denen über Buchstabenkombinationen Orte zugeordnet sind. Hierbei steht MD für Magdeburg und P für Potsdam. Ferner sind Tankstellen 57, 58 entlang der Wegstrecke 51 eingezeichnet. Eine aktuelle Fahrzeugposition ist durch ein Symbol 58 angedeutet. Eine Zeitangabe 59 unter dem Ausgangspunkt 52 gibt die bereits vergangene Fahrzeit an. Zeitangaben 60 bis 64 geben eine geschätzte Zeit an, die vergehen wird, bis das Fahrzeug zu den entsprechenden Punkten entlang der Fahrstrecke gelangen wird. In dem Kontextkennungsfeld 14 ist die Kontextkennung Navigation 15 visuell hervorgehoben.

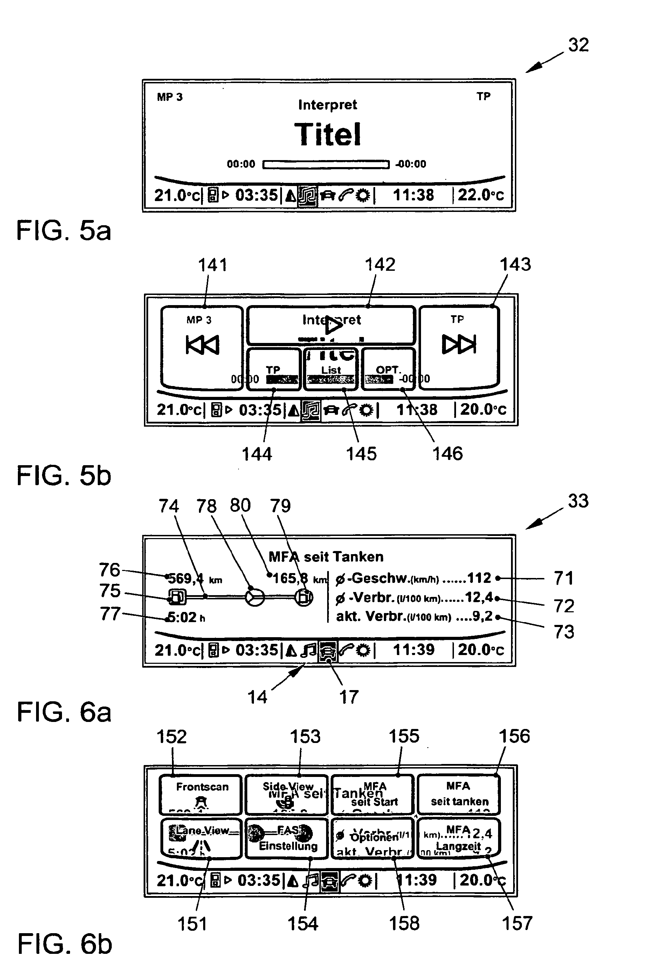

Fig. 5a ist identisch zu der Darstellung von Fig. 2 und hier nur der Übersichtlichkeit erneut wiedergegeben. Die Darstellung gleicht Ansicht 32 nach Fig. 3.

In Fig. 6a ist die Ansicht 33 einer Anzeigedarstellung, d.h. einer Kontextdarstellung, eines Anzeige- und Bedienkontextes Fahrzeug dargestellt. In einem rechten Bereich der Ansicht 33 sind eine Durchschnittsgeschwindigkeit 71, ein Durchschnittsverbrauch 72 sowie ein aktueller Verbrauch 73 angegeben. In einem linken Bereich der Ansicht 33 ist schematisch eine Wegstrecke 74 dargestellt, die zwischen zwei Tankvorgängen zurückgelegt werden kann. Über der am linken Rand dargestellten Zapfsäule 75 ist eine bereits zurückgelegte Wegstrecke 76 sowie darunter eine bereits zurückgelegte Fahrzeit 77 angegeben. Eine Position des Kraftfahrzeugs entlang der Wegstrecke 74 ist erneut mittels eines Symbols 78 angedeutet. Über einer weiteren Zapfsäule 79 am Ende der Wegstrecke 74 ist eine geschätzte Entfernung 80 angegeben, die bis zu einem erneuten Tankvorgang zurückgelegt werden kann, ohne dass dem Fahrzeug der Kraftstoff ausgehen wird. In dem Kontextkennungsfeld 14 ist die Kontextkennung Fahrzeug 17 visuell hervorgehoben.

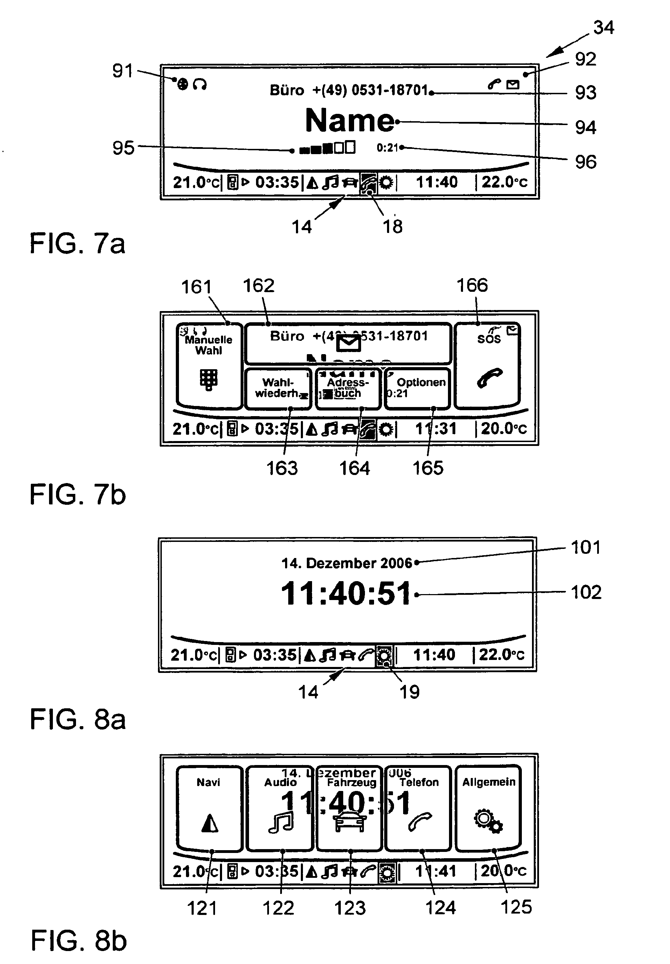

In Fig. 7a ist eine Ansicht der Anzeigefläche 3 nach Fig. 1 in einem Anzeige- und Bedienkontext Telefon dargestellt. Sie gleicht der Ansicht 34 nach Fig. 3. In oberen Ecken 91 und 92 sind Symbole wiedergegeben, die unterschiedliche Statusinformationen eines mit dem Kraftfahrzeug verbundenen Mobiltelefons anzeigen. In der Mitte ist eine Telefonnummer 93 sowie ein zugehöriger Name 94 eines Gesprächspartners angezeigt, zu dem eine Telefonverbindung über das Mobilfunktelefon aufgebaut ist. Eine aktuelle Lautstärke ist über verschieden groß dargestellte Quader 95 angedeutet. Je mehr Quader ausgefüllt sind, desto größer ist die Lautstärke. Eine Zeitangabe 96 gibt eine Gesprächsdauer wieder. In dem Kontextkennungsfeld 14 ist die Kontextkennung Telefon 18 visuell hervorgehoben.

In Fig. 8a ist eine Anzeigedarstellung, d.h. eine Kontextdarstellung, des allgemeinen Anzeige- und Bedienkontextes dargestellt. Die Ansicht gleicht der Ansicht 35 nach Fig. 3. Dargestellt sind ein Datum 101 und eine Uhrzeit 102. In dem Kontextkennungsfeld 14 ist die Kontextkennung Allgemein 19 visuell hervorgehoben.

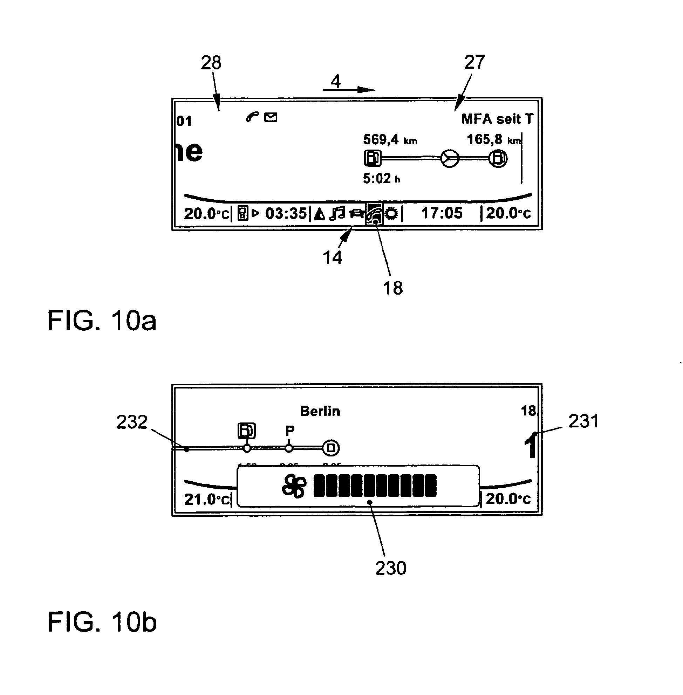

Die Benutzerschnittstelle, die mittels der Anzeige- und Bedienvorrichtung 1 umgesetzt ist, ist so ausgestaltet, dass bei einem Bedienwunsch in Bedienrichtung, der mittels der Pfeiltaste rechts b erfasst wird, schrittweise entlang der Bedienrichtung jeweils der nächste benachbarte Anzeige- und Bedienkontext gemäß der Kette 36 als neuer Bedienkontext ausgewählt wird. Sei beispielsweise der aktuell ausgewählte Anzeige- und Bedienkontext der Fahrzeugkontext, welcher in Ansicht 33 nach Fig. 3 bzw. Fig. 6a dargestellt ist, und wird die Pfeiltaste rechts b einmal betätigt, so wird hierüber ein Bedienwunsch für eine Bedienung entlang der Bedienrichtung 37 erfasst. Folglich wird der Anzeige- und Bedienkontext ausgewählt, der entlang der Bedienrichtung 37 in der Kette 36 benachbart zu dem Anzeige- und Bedienkontext Fahrzeug verknüpft ist. Dieses ist der Anzeige- und Bedienkontext Telefon. Bei einem Wechsel wird die Kontextdarstellung 27 des Anzeige- und Bedienkontextes Fahrzeug in Anzeigewechselrichtung aus der Anzeigefläche herausgeschoben, während gleichzeitig ebenfalls in Anzeigewechselrichtung, die mittels Pfeil 4 in Fig. 1 dargestellt ist, die Kontextdarstellung 28 des Anzeige- und Bedienkontextes Telefon in die Anzeigefläche hineingeschoben wird. Dieser Vorgang ist in Fig. 10a dargestellt. Beim Wechseln blinkt die Kontextkennung des neu ausgewählten Anzeige- und Bedienkontextes, hier die Kontextkennung Telefon 18, im Kontextkennungsfeld 14 einmal auf und bleibt anschließend gegenüber den übrigen Kontextkennungen visuell hervorgehoben.

Wird ein Bedienwunsch über die Pfeiltaste links a erfasst, so erfolgt die Auswahl in entgegengesetzter Bedienrichtung 38. Folglich wird die neue Kontextdarstellung entgegen der Anzeigewechselrichtung in die Anzeigefläche geschoben und die alte Kontextdarstellung folglich ebenfalls in entgegengesetzter Bedienrichtung aus der Anzeigefläche herausgeschoben.

Die Benutzerschnittstelle ist so ausgebildet, dass zu den einzelnen Anzeige- und Bedienkontexten neben den jeweiligen Anzeigedarstellungen, die in Fig. 4a bis 8a dargestellt sind, entsprechende Bediendarstellungen existieren. Diese sind in den Fig. 4b bis 8b entsprechend dargestellt. Sie können jeweils zur Einblendung gebracht werden, indem ein Drehdrückknopf j des Hauptbedienfelds 5 gedrückt wird. Alternativ und/oder zusätzlich kann vorgesehen sein, dass in die Anzeige- und Bedienvorrichtung 1 Sensoren integriert sind, die eine Position eines Körperteils in dem Raum vor der Anzeige- und Bedienvorrichtung erfassen können. In einem solchen Fall kann eine Einblendung der Bediendarstellungen erfolgen, wenn sich ein Körperteil der Anzeigefläche annähert. Bei der als Touchscreen ausgebildeten Anzeigevorrichtung 2 können die einzelnen als Bedienelemente ausgebildeten Einblendungen über eine Berührung ausgelöst und/oder aktiviert und/oder angewählt werden. Alternativ können die einzelnen Bedienelemente über ein Drehen des Drehdrückknopfes j entlang der Drehrichtung links k oder Drehrichtung rechts I ausgewählt und über ein Drücken des Drehdrückknopfes j betätigt werden. Die Einblendung der einzelnen Bediendarstellungen erfolgt in der bevorzugten Ausführungsform transparent über der jeweils entsprechenden Anzeigedarstellung nach den Fig. 4a bis 8a. Die Einblendung der Bediendarstellungen verschwindet selbstständig, sofern nach dem Auslösen für eine vorgegebene Zeitspanne keine Auswahl und/oder Betätigungshandlung vorgenommen wurde. Ferner verschwindet die Einblendung jeweils dann, wenn über die Pfeiltaste rechts b oder die Pfeiltaste links a ein neuer Anzeige- und Bedienkontext ausgewählt wird. In einem solchen Falle wird jeweils zunächst die Anzeigedarstellung des entsprechenden Anzeige- und Bedienkontextes wiedergegeben.

Das Hauptbedienfeld 5 umfasst ferner einen Zurücktaster i, über den an jeder Stelle der Benutzerschnittstelle zu einer darüber liegenden Hierarchieebene zurückgekehrt werden kann. Bei der hier beschriebenen Nutzerschnittstelle wird jeweils eine Rückkehr zu der entsprechenden Anzeigedarstellung des aktuellen Anzeige- und Bedienkontextes ausgelöst.

Über eine Hauptmenütaste h des Hauptbedienfeldes 5 kann eine Bedienansicht, wie sie in Fig. 8b dargestellt ist, ausgewählt werden. Dieses ist dieselbe Bedienansicht, die man erhält, wenn man sich im Anzeige- und Bedienkontext Allgemein befindet und den Drehdrückknopf j betätigt. Die eingeblendeten Bedienelemente 121-125 ermöglichen eine direkte Anwahl der einzelnen vorhandenen Anzeige- und Bedienkontexte Navigation 121, Audio 122, Fahrzeug 123, Telefon 124 und Allgemein 125.

Zu dem Anzeige- und Bedienkontext Navigation korrespondiert eine Bediendarstellung in Fig. 4b, bei der Bedienelemente 131-135 eingeblendet sind. Mit dem Bedienelement 131 kann ein Standort gespeichert werden. Bei Betätigen des Zieleingabe-Bedienelements 132 wird eine Zieleingabe aktiviert. Das Bedienelement Stau umfahren 133 aktiviert eine Navigation, bei der ein aktuell mitgeteilter Stau umfahren wird. Über ein Betätigen des Bedienelementes Karte 134 kann eine Darstellung einer Navigationskarte ausgelöst werden. Durch das Betätigen des Bedienelementes Optionen 135 gelangt man in ein Menü, in dem einen weitere Optionen angeboten werden.

Im Anzeige- und Bedienkontext Audio wird eine Bediendarstellung wiedergegeben, wie sie in Fig. 5b dargestellt ist. Eingeblendet werden eine Rücksprungtaste 141, eine Wiedergabetaste 142, eine Vorsprungtaste 143, eine TP-Taste 144, über die ein so genannter Trafficpilot aktiviert werden kann. Ein Listenbedienelement 145 bietet die Möglichkeit, sich eine so genannte Wiedergabeliste anzeigen zu lassen. Über ein Betätigen des Optionsbedienelements 146 gelangt man in ein Menü mit weiteren Optionen.

In Fig. 6b ist die Bedienansicht des Anzeige- und Bedienkontextes Fahrzeug dargestellt. Über Bedienelemente 151, 152, 153 können unterschiedliche Umfeldansichten ausgelöst werden. Über ein so genanntes FAS-Einstellung-Bedienelement 154 kann ein Menü zur Darstellung und Veränderung von Werkseinstellungen zur Anzeige gebracht werden. Die Bedienelemente 155 bis 157 ermöglichen eine Anwahl von unterschiedlichen Fahrzeugstatusdarstellungen. Über ein Optionenbedienelement 158 gelangt man in ein Menü mit weiteren Optionen.

In Fig. 7b ist die Bedienansicht des Anzeige- und Bedienkontextes Telefon wiedergegeben. Über ein Bedienelement Manuelle Wahl 161 kann ein Menü ausgewählt werden, das eine Tastatur zum Auslösen einer manuellen Wahl zur Anzeige bringt.

Bei einer Betätigung eines mit einem Briefumschlag gekennzeichneten Bedienelements 162 gelangt man in ein so genanntes Nachrichtenmenü, in dem beispielsweise empfangene SMS-Nachrichten gelesen werden können, neue SMS-Nachrichten verfasst werden können usw. Über ein Wahlwiederholungsbedienelement 163 kann eine Wahlwiederholung ausgelöst werden. Ein Bedienelement Adressbuch 164 ist vorgesehen, um in ein Adressbuch zu gelangen. Ein Bedienelement Optionen 165 ist vorgesehen, um ein Menü mit weiteren Optionen anwählen zu können. Ein SOS-Bedienelement 166 löst die Anwahl einer Notrufnummer aus.

Im Folgenden sollen die übrigen in dem Audiobedienfeld 6 und dem Klimabedienfeld 7 angeordneten Bedienelemente und ihre Funktionen erläutert werden. Diese Bedienelemente können unabhängig vom aktuellen Anzeige- und Bedienkontext eine übergreifende Menü-Einblendung oder eine Direkteinstelleinblendung auf der Anzeigefläche bewirken. Die übergreifenden Menüeinblendungen sind Einblendungen von Menüs, die unabhängig von dem aktuellen Anzeige- und Bedienkontext erfolgen. Sie werden vorzugsweise dem jeweiligen Anzeige- und Bedienkontext teiltransparent überlagert eingeblendet. Die Einblendung erfolgt solange, bis eine Bedienhandlung eine Rückkehr zu dem aktuellen oder einem neu ausgewählten Anzeige- und Bedienkontext bewirkt. Direkteinstelleinblendungen werden hingegen unabhängig von dem aktuellen Anzeige- und Bedienkontext, auch über die übergreifenden Menüs vorzugsweise mit einer Deckkraft von 100% im Vordergrund eingeblendet. Sie stellen vorzugsweise einen Parameter eines Fahrzeugsystems oder einer Fahrzeugfunktion usw. dar, der über ein oder mehrere Bedienelemente eingestellt werden kann. Beispielsweise sind vorzugsweise einer Temperatureinstellung, einer Gebläsestärkeeinstellung und/oder einer Sitzheizungsstufeneinstellung Direkteinstelleinblendungen zugeordnet. Nutzerschnittstellen können für andere oder weitere Parameter Direkteinstelleinblendungen vorsehen. Ebenfalls können einige Einstellungen gegebenenfalls auch redundant über kontextabhängige Bedienmenüs oder übergreifenden Bedienmenüs vorgenommen werden.

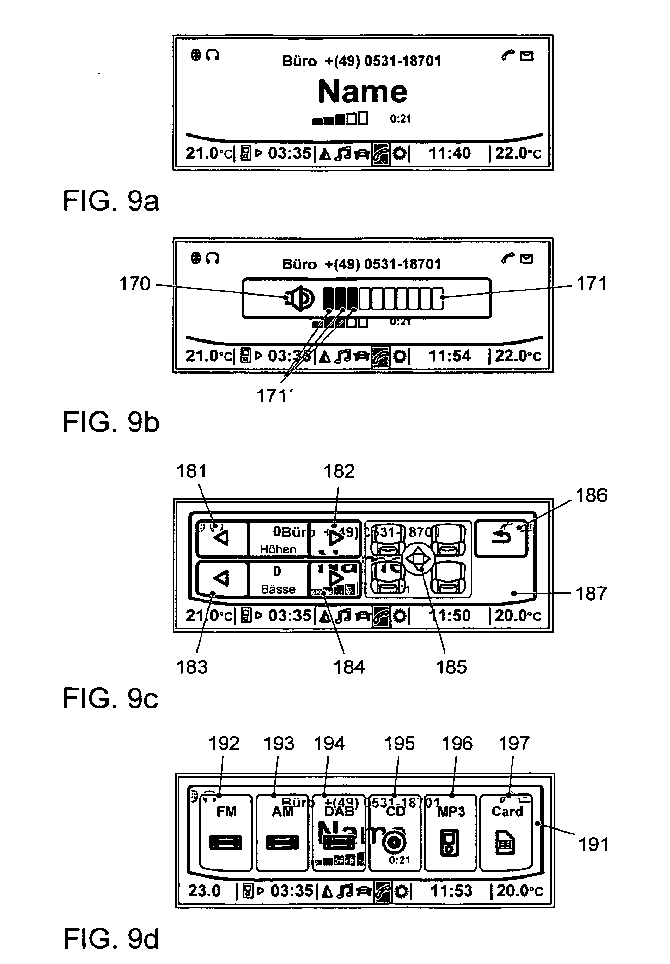

Es wird im Folgenden davon ausgegangen, dass sich die Anzeige- und Bedienvorrichtung aktuell im Anzeige- und Bedienkontext Telefon befindet, wie dies in Fig. 9a angedeutet ist, die identisch zu Fig. 7a bzw. Ansicht 34 nach Fig. 3 ist.

Wird ein linker Drehdrückknopf c betätigt, so kann eine Wiedergabelautstärke mittels eines Drehens in linker Richtung d oder rechter Richtung e erniedrigt bzw. erhöht werden. Eine Betätigung bewirkt eine Direkteinstelleinblendung Lautstärke 169, wie sie in Fig. 9b dargestellt ist. Neben einem Lautsprechersymbol 170 umfasst die Direkteinstelleinblendung Lautstärke 169 mehrere Kästchen 171. Die Anzahl der ausgefüllten Kästchen 171' gibt die Lautstärke an. Nachdem ein Einstellen der Lautstärke beendet ist, verschwindet die Direkteinstelleinblendung Lautstärke 169 nach einer vorgegebenen Zeitspanne automatisch. Die Direkteinstelleinblendung Lautstärke 169 erfolgt mittig auf der Anzeigefläche 3, da diese Lautstärkeneinstellung eine Gesamtlautstärke regelt. Eine Verortung auf der Anzeigefläche 3 korrespondiert mit einer Wirkposition im Fahrzeuginnern.

Im Audiobedienfeld 6 befindet sich ferner eine so genannte Sound-Taste oder Klangtaste f. Wird diese betätigt, so erhält man eine Ansicht nach Fig. 9c. Es werden Bedienelemente 181-185 eingeblendet, über die die Höhen (181, 182) und Bässe (183, 184) der Wiedergabe eingestellt werden können sowie eine Klangfeldverteilung (185) räumlich im Fahrzeug erfolgen kann. Da hierfür in der Regel ein Klangeindruck notwendig ist, um eine gewünschte Einstellung zu finden, wird diese Einblendung nicht automatisch beendet. Vielmehr ist es erforderlich, ein als Rückkehrbedienelement ausgebildetes Bedienelement 186 zu betätigen, um zu der Ansicht nach Fig. 9a zurückzukehren. Ferner kehrt man zu einer Anzeigedarstellung eines anderen Anzeige- und Bedienkontextes "zurück", sofern ein solcher über die Pfeiltaste rechts b oder die Pfeiltaste links a ausgewählt wird. Auch ein erneutes Betätigen der Klangtaste f führt zu einer Ausblendung der übergreifenden Menü-Einblendung.

Ein Betätigen der Schallquellentaste g im Audiobedienfeld 6 bringt eine übergreifende Menü-Einblendung Schallquelle 191 nach Fig. 9d zur Anzeige. Ein FM-Radio 192, ein AM-Radio 193, ein DAB-Radio 194, ein CD-Player 195, ein MP3-Player 196 und eine Memorycard 197 sind jeweils als Bedienelement ausgestaltet, so dass eine entsprechende Schallquelle durch Betätigen des entsprechenden Bedienelements 191-197 ausgewählt werden kann. Bei Auswahl einer neuen Schallquelle verschwindet die Einblendung 191. Sie verschwindet ebenfalls, wenn die Schallquellentaste g erneut betätigt wird oder ein neuer Anzeige- und Bedienkontext ausgewählt wird.

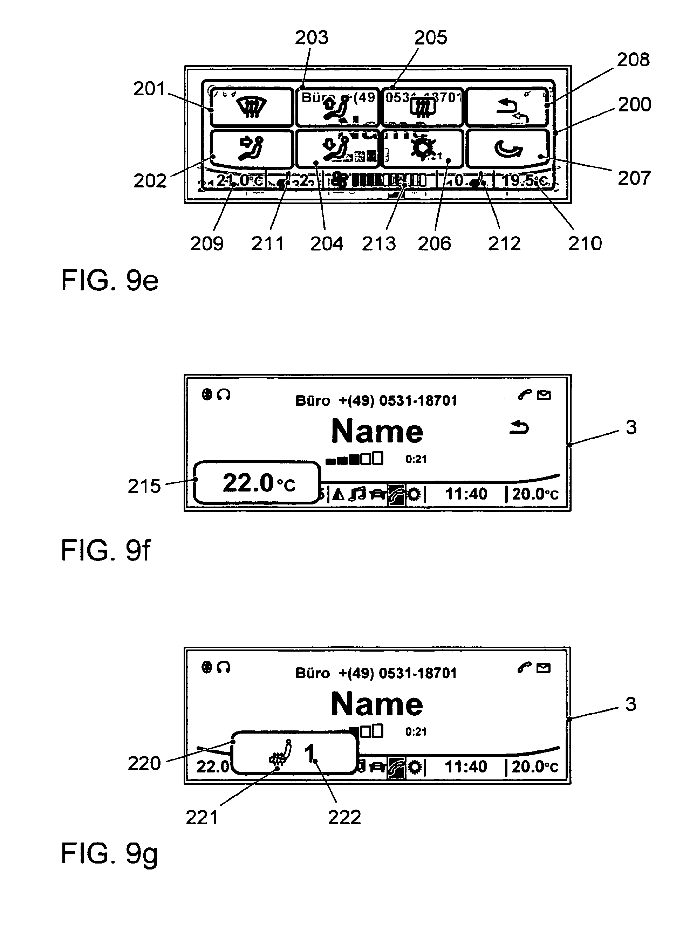

Betätigt man eine Klimataste m des Klimabedienfelds 7, so erhält man eine Ansicht, wie sie in Fig. 9e dargestellt ist, bei der eine kontextübergreifende Menü-Einblendung Klima 200 gezeigt ist. Über Bedienelemente 201-204 kann die Luftverteilung im Innenraum gesteuert werden. Das Bedienelement 201 bewirkt ein Enteisen der Frontscheibe und/oder betätigt eine Frontscheibenheizung. Wird ein Enteisungsmodus über das Bedienelement 201 ausgewählt, so werden die anderen Luftzufuhrrichtungen, die über die Bedienelemente 202 bis 204 ausgewählt werden, deaktiviert und umgekehrt. Über ein Bedienelement 205 kann eine Heckscheibenheizung aktiviert werden. Ein Bedienelement 206 schaltet eine Klimaanlage ein und aus. Über ein Bedienelement 207 kann ausgewählt werden, ob Frischluft in das Fahrzeug eingelassen werden soll oder ob die Lüftung im Umluftbetrieb betrieben werden soll. Über eine Rückkehrtaste 208 kann in die entsprechende Anzeigedarstellung des aktuellen Anzeige- und Bedienkontextes zurückgekehrt werden. Die einzelnen Bedienelemente 201-207 sind als virtuelle An-Aus-Taster ausgebildet.

In einem unteren Bereich der kontextübergreifenden Menü-Einblendung Klima 200 werden die angewählte Temperatur 209 für eine linke Fahrzeughälfte und eine weitere angewählte Temperatur 210 für eine rechte Fahrzeughälfte angezeigt. Benachbart zu den angewählten Temperaturen sind entsprechende Statusinformationen für eine linke Sitzheizung 211 und eine rechte Sitzheizung 212 gezeigt. Hierzwischen ist ein Status für eine Gebläsestärke 213 dargestellt. Die Temperaturen 209, 210, die Statusinformationen über die Sitzheizung 211, 212 sowie über die Gebläsestärke 213 geben jeweils den ausgewählten Status wieder.

Eine Auswahl der Temperatur erfolgt über einen Drehdrückknopf q des Klimabedienfelds 7 durch ein Drehen in linker Richtung r oder rechter Richtung s, wobei ein Drehen in linker Richtung r ein Erniedrigen der Temperatur und ein Drehen in rechter Richtung s ein Erhöhen der Temperatur bewirken. Über ein Betätigen des Drehdrückknopfs q kann zwischen der Fahrerseite und der Beifahrerseite gewechselt werden. Eine hinsichtlich der Darstellungsposition mit der zugeordneten Fahrzeughälfte korrespondierende Direkteinstelleinblendung Temperatur 215 ist in Fig. 9f gezeigt. Die Direkteinstelleinblendung Temperatur 215 erscheint in der linken Hälfte der Anzeigefläche, um anzudeuten, dass die Temperatur für die linke Fahrzeughälfte eingestellt wird.

Die Klimaanlage wird über einen An-Aus-Taster u aktiviert bzw. deaktiviert. Ein An-Aus-Taster Auto o ist vorgesehen, um eine automatische Temperatur-, Gebläse- und Luftverteilungs-Regelung ein- und auszuschalten. Ein automatischer Betrieb wird vorzugsweise über ein in den An-Aus-Taster Auto o integriertes Leuchtmittel angezeigt. Diese Funktion sorgt dafür, dass die ausgewählte Temperatur schnellstmöglich erreicht wird und anschließend konstant gehalten wird.

Über eine Sitzheizungs-Plustaste t und eine Sitzheizungs-Minustaste v kann die Sitzheizung entsprechend stufenweise erhöht bzw. erniedrigt werden. Über ein Betätigen des Drehdrückschalters q kann auch hier zwischen der Fahrerseite und der Beifahrerseite gewechselt werden. Vorzugsweise weist der Drehdrückschalter q Leuchtmittel auf, die andeuten, ob eine Fahrerseite oder Beifahrerseite für ein Einstellen der jeweiligen Seite und/oder sitzabhängigen Einstellungen aktiviert ist.

Beim Betätigen der Sitzheizungs-Plustaste t oder der Sitzheizungs-Minustaste v wird eine Direkteinstelleinblendung Sitzheizung 220 grafisch hervorgehoben, vorzugsweise farbig hervorgehoben, eingeblendet. Die Direkteinstelleinblendung Sitzheizung 220 umfasst ein Sitzheizungssymbol 221 und eine numerische Heizstufenangabe 222. Die Einblendung erfolgt auf der Seite der Anzeigefläche 3, die der Seite des Fahrzeugs entspricht, auf der der entsprechende Sitz angeordnet ist, der mit der entsprechenden Sitzheizung beheizt wird. Hierdurch wird eine Kontrollmöglichkeit geschaffen, ob über die Sitzheizungs-Plus- oder -Minus-Taste t, v auch die Sitzheizung des gewünschten Sitzes eingestellt wird.

Eine Gebläsestärke kann schließlich über eine Gebläse-Plustaste n und eine Gebläse-Minustaste p variiert werden. Werden die Gebläse-Plustaste n oder die Gebläse-Minustaste p betätigt, so erfolgt eine hervorgehobene Direkteinstelleinblendung, wie sie in Fig. 10b dargestellt ist. Diese erfolgt entweder über die Anzeigeansicht oder die Bedienansicht des aktuellen Anzeige- und Bedienkontextes oder über die übergreifende Menü-Einblendung, wie beispielsweise die der Klimaanlage.

Ebenso verhält es sich, wenn die Sitzheizungs-Plustaste t oder die Sitzheizungs-Minustaste v betätigt werden. Dieses ist beispielsweise in Fig. 9g exemplarisch dargestellt. Auch eine Änderung der Temperatureinstellung, die über den Drehdrückknopf q bewirkt werden kann, führt zu einer ähnlichen Darstellung, wie sie in Fig. 9f dargestellt ist.

Die Direkteinstelleinblendungen sind bei einer bevorzugten Ausführungsform vollständig unabhängig von dem ausgewählten Anzeige- und Bedienkontext. Während die übergreifenden Menü-Einblendungen, wie sie beispielsweise in Fig. 9c, 9d und 9e gezeigt sind, bei einer Auswahl eines neuen Bedienkontextes über die Pfeiltaste rechts b oder Pfeiltaste links a, beendet werden, werden die Direkteinstelleinblendungen von einer neuen Auswahl nicht beeinflusst. D.h., eine Änderung der Kontextdarstellung im Hintergrund findet unabhängig von der Direkteinstelleinblendung statt. Dieses ist in Fig. 10b gezeigt. Während die Direkteinstelleinblendung Gebläse 230 mit einer Deckkraft von 100% im Vordergrund mittig dargestellt ist, da es sich um eine allgemeine Gebläsestärkeeinstellung handelt, wechselt im Hintergrund die Darstellung in Bedienrichtung von der Anzeigedarstellung 231 des Anzeige- und Bedienkontextes Allgemein zu der Anzeigedarstellung 232 des Anzeige- und Bedienkontextes Fahrzeug.

Als besonders vorteilhaft hat es sich erwiesen, für jeden Anzeige- und Bedienkontext eine Kontextdarstellung in dem beschriebenen Beispiel eine Anzeigedarstellung vorzusehen, die bei einem Wechsel in einen neuen Anzeige- und Bedienkontext dargestellt wird. Diese ist vorzugsweise so ausgestaltet, dass jeweils alle Kontextkennungen der anderen Anzeige- und Bedienkontexte wahrnehmbar sind.

Die beschriebene Benutzerschnittstelle kann besonders bevorzugt mit einer Anzeige- und Bedienvorrichtung eingesetzt werden, in der mindestens eine Sensoreinheit zum Erfassen der dreidimensionalen Position eines Betätigungselements zumindest vor der Anzeigefläche vorgesehen ist. Bei einer so ausgestalteten Ausführungsform werden die kontextabhängigen Bedienmenüs zumindest alternativ zu der Betätigung des Drehdrückknopfes q bei einer Annäherung eines vorzugsweise als Finger ausgestalteten Betätigungselements eingeblendet und bei dessen Abwesenheit, gegebenenfalls zeitverzögert, ausgeblendet.

Bei bevorzugten Ausführungsformen solcher Sensoreinheiten ist es möglich, eine Betätigungshandlung eines Fahrers von der eines Beifahrers zu unterscheiden. Eine beispielhafte Sensoreinheit, die dieses ermöglicht, ist in WO 2004/078536 beschrieben. Die dort beschriebenen Sensoreinheiten nutzen über den jeweiligen Fahrzeugsitz kapazitiv eingekoppelte Hochfrequenzsignale, die über den Körper des jeweiligen Nutzers übertragen und wiederum kapazitiv, d.h. berührungslos, in Sensoren eingekoppelt werden. Unterscheiden sich die Hochfrequenzsignale, die über den Fahrersitz und den Beifahrersitz eingekoppelt werden, so können eine Betätigungshandlung des Fahrers und des Beifahrers unterschieden werden.

Bei einer solchen Ausführungsform ist eine Ausgestaltung der Nutzerschnittstelle in der Weise vorteilhaft, dass bei der eine Betätigungshandlung eines Bedienelements durch einen Nutzer vorrangig jeweils der dem Nutzer zugeordnete Parameter verändert wird. Nur wenn, der Nutzer vor einem Drehen zum Einstellen des Parameters eine Umschalthandlung bewirkt, insbesondere beispielsweise durch ein Drücken des Dreh-drück-knopfes, wird der Parameter des anderen Nutzers verändert. Bei einer solchen Ausführungsform kommt einer Darstellung der jeweiligen Direkteinstelleinblendung an einem Ort auf der Anzeigefläche, der mit einer Position des entsprechend bedienten Fahrzeugsystems oder dessen Wirkbereich korrespondiert eine besondere Bedeutung zu. Hierüber kann zuverlässig überprüft werden, ob jeweils gerade die gewünschte Einstellung vorgenommen wird.

Die beschriebenen Benutzerschnittstellen haben lediglich exemplarischen Charakter. Ein grafischer Wechsel zwischen den verketteten Anzeige- und Bedienkontexten kann auch in der Weise erfolgen, dass man die Anzeigefläche als einen Rahmen betrachtet, der über die einzelnen Kontextdarstellungen der verschiedenen Anzeige- und Bedienkontexte bewegt wird. In einem solchen Fall ist es vorteilhaft, bei einer Bedienung in Bedienrichtung die neue Kontextdarstellung entgegen der Anzeigewechselrichtung in die Anzeigefläche hineinzuschieben. In der Regel ist eine solche Ausführungsform jedoch für die Benutzer gewöhnungsbedürftig, da Nutzer eine Bewegung auf der Anzeigefläche entgegen der Bedienrichtung in der Regel überraschend finden. Selbstverständlich kann der Wechsel der Ansichten auch auf andere Weise, beispielsweise durch Ausblendung und Einblendung oder Überblendung, erfolgen.

Die Pfeiltaste links a und Pfeiltaste rechts b in der beschriebenen Ausführungsform sind Bedienelemente einer Bedieneinrichtung. Ebenso kann eine als Touchscreen ausgebildete Anzeigevorrichtung als Bedieneinrichtung dienen, um einen Bedienwunsch für eine Auswahl eines neuen Anzeige- und Bedienkontext zu erfassen. In einem solchen Fall können beispielsweise an einem rechten und linken Rand als virtuelle Bedienelemente ausgestaltete Pfeiltasten verwendet werden. In einem solchen Fall stellt die Anzeigevorrichtung zugleich eine Bedieneinrichtung zum Erfassen einer Benutzerauswahl hinsichtlich des Anzeige- und Bedienkontextes entlang der Bedienrichtung und/oder entlang der entgegengesetzten Bedienrichtung dar.

### Bezugszeichenliste

- 1: Bedienvorrichtung
- 2: Anzeigevorrichtung
- 3: Anzeigefläche
- 4: Pfeil
- 5: Hauptbedienfeld
- 6: Audiobedienfeld
- 7: Klimabedienfeld
- 8: Statusfeld
- 9: linker Rand des Statusfelds
- 10: rechter Rand des Statusfelds
- 11: Quellensymbol
- 12: Dreieck
- 13: Wiedergabe Zeitangabe
- 14: Kontextkennungsfeld
- 15: Kontextkennung Navigation
- 16: Kontextkennung Audio
- 17: Kontextkennung Fahrzeug
- 18: Kontextkennung Telefon
- 19: Kontextkennung Allgemein
- 20: Kontextdarstellungsfeld
- 21: alphanumerische Schallquellenangabe
- 22: Interpret
- 23: Titel eines Lieds
- 24: Verlaufsanzeige
- 25: weitere alphanumerische Angabe
- 26: Uhrzeitangabe
- 27: Kontextdarstellung des Anzeige- und Bedienkontextes Fahrzeug
- 28: Kontextdarstellung des Anzeige- und Bedienkontextes Telefon
- 31: Ansicht des Anzeige- und Bedienkontextes Navigation
- 32: Ansicht des Anzeige- und Bedienkontextes Audio
- 33: Ansicht des Anzeige- und Bedienkontextes Fahrzeug
- 34: Ansicht des Anzeige- und Bedienkontextes Telefon
- 35: Ansicht des Anzeige- und Bedienkontextes Allgemein
- 36: Kette
- 37: Bedienrichtung
- 38: entgegengesetzte Bedienrichtung
- 51: Fahrstrecke
- 52: Ausgangspunkt
- 53: Zielpunkt
- 54,55: Wegpunkte
- 56,57: Tankstellen
- 58: Symbol der Fahrzeugposition
- 59: Zeitangabe
- 60-64: Zeitangaben
- 71: Durchschnittsgeschwindigkeit
- 72: Durchschnittsverbrauch
- 73: aktueller Verbrauch
- 74: Wegstrecke zwischen zwei Tankvorgängen
- 75: Zapfsäule
- 76: zurückgelegte Wegstrecke
- 77: zurückgelegte Fahrzeit
- 78: Symbol für das Fahrzeug
- 79: weitere Zapfsäule
- 80: geschätzte Entfernung für zurücklegbare Wegstrecke
- 91,92: obere Ecken
- 93: Telefonnummer
- 94: Name eines Gesprächspartners
- 95: Quader
- 96: Gesprächsdauer
- 101: Datum
- 102: Uhrzeit
- 121: Bedienelement für den Anzeige- und Bedienkontext Navigation
- 122: Bedienelement für den Anzeige- und Bedienkontext Audio
- 123: Bedienelement für den Anzeige- und Bedienkontext Fahrzeug
- 124: Bedienelement für den Anzeige- und Bedienkontext Telefon
- 125: Bedienelement für den Anzeige- und Bedienkontext Allgemein
- 131: Bedienelement Standort speichern
- 132: Zieleingabebedienelement
- 133: Bedienelement Stau umfahren
- 134: Bedienelement Karte
- 135: Bedienelement Optionen
- 141: Rücksprungtaste
- 142: Wiedergabetaste
- 143: Vorsprungtaste
- 144: TP-Taste
- 145: Listenbedienelement
- 146: Optionsbedienelement
- 151 - 153: Bedienelemente für Umfeldansichten
- 154: FAS-Einstellung-Bedienelement
- 155-157: Bedienelemente für eine Auswahl unterschiedlicher Fahrzeugstatusdarstellungen
- 158: Optionen-Bedienelement
- 161: Bedienelement manuelle Wahl
- 162: Bedienelement Nachrichtenmenü
- 163: Wahlwiederholungsbedienelement
- 164: Bedienelement Adressbuch
- 165: Bedienelement Optionen
- 166: SOS-Bedienelement
- 169: Direkteinstelleinblendung Lautstärke
- 170: Lautsprechersymbol
- 171: Kästchen
- 171': ausgefüllte Kästchen
- 181-185: Bedienelemente für eine Klangeinstellung
- 186: Rückkehrbedienelement
- 187: übergreifende Menü-Einblendung Klangeinstellung
- 191: Menü-Einblendung Schallquelle
- 192: Bedienelement FM-Radio
- 193: Bedienelement AM-Radio
- 194: Bedienelement DAB-Radio
- 195: Bedienelement CD-Player
- 196: Bedienelement MP3-Player
- 197: Bedienelement Memory-Card
- 200: kontextübergreifende Menü-Einblendung Klima
- 201 - 204: Bedienelemente für die Luftverteilung
- 205: Bedienelement Heckscheibenheizung
- 206: Bedienelement Klimaanlage
- 207: Bedienelement Umluftbetrieb
- 208: Rückkehrtaste
- 209: ausgewählte Temperatur
- 210: weitere ausgewählte Temperatur
- 211: linke Sitzheizung
- 212: rechte Sitzheizung
- 213: Gebläsestärke
- 215: Direkteinstelleinblendung Temperatur
- 220: Direkteinstelleinblendung Sitzheizung
- 221: Sitzheizungssymbol
- 222: numerische Heizstufenangabe
- 230: Direkteinstelleinblendung Gebläse
- 231: Anzeigedarstellung des Anzeige- und Bedienkontextes Allgemein
- 232: Anzeigedarstellung des Anzeige- und Bedienkontextes Fahrzeug
- a: Pfeiltaste links
- b: Pfeiltaste rechts
- c: linker Drehdrückknopf
- d: Drehrichtung links
- e: Drehrichtung rechts
- f: Klang- (Sound-) Taste
- g: Quellentaste
- h: Hauptmenütaste
- i: Rücksprungtaste
- j: rechter Drehdrückknopf
- k: Drehrichtung links
- I: Drehrichtung rechts
- m: Klimataste
- n: Gebläse-Plus-Taster
- o: Automode-An-Aus-Taster
- p: Gebläse-Minus-Taste
- q: Klimaanlagendrehdrückknopf
- r: Drehrichtung links
- s: Drehrichtung rechts
- t: Sitzheizungs-Plus-Taste
- u: An-Aus-Taste (Klimaanlage)
- v: Sitzheizungs-Minus-Taste
- w: Umluft-An-Aus-Taster

## Patentansprüche

1. Anzeige- und Bedienvorrichtung (1) umfassend eine Anzeigevorrichtung (2), eine mit der Anzeigevorrichtung (2) verknüpfte Steuereinheit zum Umsetzen einer Benutzerschnittstelle, wobei die Benutzerschnittstelle mindestens zwei Anzeige- und Bedienkontexte umfasst, und mindestens eine Bedieneinrichtung zum Auswählen eines der mindestens zwei Anzeige- und Bedienkontexte, wobei die Steuereinheit die grafische Darstellung von zu dem ausgewählten der mindestens zwei Anzeige- und/oder Bedienkontexte gehörigen Informationen auf einer Anzeigefläche (3) der Anzeigevorrichtung (2) steuert, so dass fortwährend jeweils die zu dem ausgewählten Anzeige- und Bedienkontext gehörigen Informationen auf der Anzeigefläche (3) dargestellt sind, **dadurch gekennzeichnet, dass** die Anzeige- und Bedienkontexte in einer geschlossenen Kette (36) miteinander verknüpft sind, wobei eine entlang der Kette (36) orientierte Bedienrichtung existiert und mittels der Bedieneinrichtung ein Bedienwunsch für eine Bedienung entlang der Bedienrichtung erfassbar ist, und ein neuer ausgewählter Anzeige- und Bedienkontext, dessen zugehörige Informationen auf der Anzeigefläche (3) dargestellt werden, derjenige der mindestens zwei Anzeige- und Bedienkontexte ist, der in Bedienrichtung benachbart zu dem gegenwärtig ausgewählten Anzeige- und Bedienkontext ist.

2. Anzeige- und Bedienvorrichtung (1) nach Anspruch 1, **dadurch gekennzeichnet, dass** ein Kontextdarstellungsfeld (20) vorgesehen ist, in dem die Informationen zu genau einem der mindestens zwei Anzeige- und -Bedienkontexte in einer Kontextdarstellung in dem Kontextdarstellungsfeld (20) dargestellt sind.

3. Anzeige- und Bedienvorrichtung (1) nach Anspruch 1 oder 2, **dadurch gekennzeichnet, dass** zu der mindestens einen Bedienrichtung eine Anzeigewechselrichtung existiert und eine Änderung von der gegenwärtige Kontextdarstellung auf die neue Kontextdarstellung in der Weise erfolgt, dass die neue Kontextdarstellung entlang der Anzeigewechselrichtung in die Anzeigefläche (3) geschoben wird und hierbei die gegenwärtige Kontextdarstellung aus der Anzeigefläche (3) ebenfalls entlang der Anzeigewechselrichtung heraus geschoben wird.

4. Anzeige- und Bedienvorrichtung (1) nach einem der vorangehenden Ansprüche, **dadurch gekennzeichnet, dass** ein Kontextkennungsfeld (14), vorzugsweise auf der Anzeigefläche (3), existiert, in dem für jeden der mindestens zwei Anzeige- und Bedienkontexte eine zugeordnete Kontextkennung (15, 16, 17, 8, 19) dargestellt ist, wobei die zu dem gegenwärtig ausgewählten Kontext zugeordnete Kontextkennung (15, 16, 17, 8, 19) visuell hervorgehoben ist.

5. Anzeige- und Bedienvorrichtung (1) nach einem der vorangehenden Ansprüche, **dadurch gekennzeichnet, dass** die Kontextkennungen (15, 16, 17, 8, 19) in dem Kontextkennungsfeld (14) in der Reihenfolge benachbart zueinander entlang der Anzeigewechselrichtung angeordnet sind, in der die Anzeige- und Bedienkontexte zueinander benachbart in der Kette (36) angeordnet sind.

6. Anzeige- und Bedienvorrichtung (1) nach einem der vorangehenden Ansprüche, **dadurch gekennzeichnet, dass** jede der Kontextkennungen (15, 16, 17, 8, 19) jeweils immer an derselben Stelle innerhalb des Kontextkennungsfelds (14) dargestellt ist.

7. Anzeige- und Bedienvorrichtung (1) nach einem der Ansprüche 1 bis 5, **dadurch gekennzeichnet, dass** die Kontextkennungen (15, 16, 17, 8, 19) bei einer Auswahl eines neuen Anzeige- und Bedienkontexts sich in der Anzeigewechselrichtung relativ zu einem festen Fokus bewegen, der mit der visuellen Hervorhebung der zu dem ausgewählten Anzeige- und Bedienkontext zugehörigen Kontextkennung (15, 16, 17, 8, 19) zusammenfällt.

8. Anzeige- und Bedienvorrichtung (1) nach Anspruch 7, **dadurch gekennzeichnet, dass** die entlang der Anzeigewechselrichtung vor der Auswahl eines neuen Anzeige- und Bedienkontextes zuletzt angeordnete Kontextkennung (15, 16, 17, 8, 19) nach dem Wechsel der Darstellung als erste Kontextkennung (15, 16, 17, 8, 19) entlang der Anzeigewechselrichtung angeordnet ist.

9. Anzeige- und Bedienvorrichtung (1) nach einem der vorangehenden Ansprüche, **dadurch gekennzeichnet, dass** eine zu der Bedienrichtung entgegengesetzte Bedienrichtung existiert, und die Bedieneinrichtung so ausgestaltet ist, dass zusätzlich ein entgegengesetzter Bedienwunsch für eine Bedienung entlang der entgegengesetzten Bedienrichtung erfassbar ist, und beim Erfassen eines entgegengesetzten Bedienwunsches der neu ausgewählte Anzeige- und Bedienkontext derjenige der mindestens zwei Anzeige- und Bedienkontexte ist, der in entgegengesetzter Bedienrichtung benachbart zu dem gegenwärtig ausgewählten Bedienkontext in der Kette (36) angeordnet ist.

10. Anzeige- und Bedienvorrichtung (1) nach einem der vorangehenden Ansprüche, **dadurch gekennzeichnet, dass** die Bedieneinrichtung ein Bedienrichtung-Bedienelement und ein Entgegengesetzte-Bedienrichtung-Bedienelement umfasst, die entlang der Anzeigewechselrichtung so angeordnet sind, dass ein Verbindungsvektor von dem Entgegengesetzte-Bedienrichtung-Bedienelement zu dem Bedienrichtung-Bedienelement parallel zu Anzeigewechselrichtung ausgerichtet ist und eine Orientierung aufweist, die mit der Anzeigewechselrichtung übereinstimmt.

11. Anzeige- und Bedienvorrichtung (1) nach Anspruch 10, **dadurch gekennzeichnet, dass** das Bedienrichtung-Bedienelement und Entgegengesetzte-Bedienrichtung-Bedienelement auf entgegensetzten Seiten der Anzeigefläche (3) angeordnet sind, so dass das Bedienrichtung-Bedienelement sich in Anzeigewechselrichtung von der Anzeigefläche (3) befindet.

## Claims

1. Display and operator control apparatus (1) comprising a display apparatus (2), a control unit, linked to the display apparatus (2), for implementing a user interface, wherein the user interface comprises at least two display and operator control contexts, and at least one operator control device for selecting one of the at least two display and operator control contexts, wherein the control unit controls the graphical presentation of information associated with the selected one of the at least two display and/or operator control contexts on a display panel (3) of the display apparatus (2), so that the respective information associated with the selected display and operator control context is presented constantly on the display panel (3), **characterized in that** the display and operator control contexts are linked to one another in an unbroken chain (36), wherein an operator control direction oriented along the chain (36) exists and the operator control device can be used to capture an operator control request for operator control in the operator control direction, and a new selected display and operator control context, the associated information from which is presented on the display panel (3), is that of the at least two display and operator control contexts which is adjacent to the currently selected display and operator control context in the operator control direction.

2. Display and operator control apparatus (1) according to Claim 1, **characterized in that** a context presentation field (20) is provided which presents the information relating to precisely one of the at least two display and operator control contexts in a context presentation in the context presentation field (20).

3. Display and operator control apparatus (1) according to Claim 1 or 2, **characterized in that** a display changeover direction exists for the at least one operator control direction and a change from the current context presentation to the new context presentation takes place such that the new context presentation is pushed into the display panel (3) in the display changeover direction and this involves the current context presentation being pushed out of the display panel (3) likewise in the display changeover direction.

4. Display and operator control apparatus (1) according to one of the preceding claims, **characterized in that** a context identifier field (14), preferably on the display panel (3), exists which presents an associated context identifier (15, 16, 17, 18, 19) for each of the at least two display and operator control contexts, wherein the context identifier (15, 16, 17, 18, 19) associated with the currently selected context is visually highlighted.

5. Display and operator control apparatus (1) according to one of the preceding claims, **characterized in that** the context identifiers (15, 16, 17, 18, 19) in the context identifier field (14) are arranged in the order adjacently to one another in the display changeover direction in which the display and operator control contexts are arranged adjacently to one another in the chain (36).

6. Display and operator control apparatus (1) according to one of the preceding claims, **characterized in that** each of the context identifiers (15, 16, 17, 18, 19) is always presented at the same position within the context identifier field (14) in each case.

7. Display and operator control apparatus (1) according to one of Claims 1 to 5, **characterized in that** the context identifiers (15, 16, 17, 18, 19) move in the display changeover direction relative to a fixed focus, which coincides with the visual highlighting of the context identifier (15, 16, 17, 18, 19) associated with the selected display and operator control context, when a new display and operator control context is selected.

8. Display and operator control apparatus (1) according to Claim 7, **characterized in that** the context identifier (15, 16, 17, 18, 19) which is arranged last in the display changeover direction prior to the selection of a new display and operator control context is arranged as the first context identifier (15, 16, 17, 18, 19) in the display changeover direction after the presentation has changed over.

9. Display and operator control apparatus (1) according to one of the preceding claims, **characterized in that** an operator control direction opposite to the operator control direction exists, and the operator control device is designed such that additionally an opposite operator control request for operator control in the opposite operator control direction can be captured, and the capture of an opposite operator control request involves the newly selected display and operator control context being that of the at least two display and operator control contexts which is arranged in the opposite operator control direction adjacently to the currently selected operator control context in the chain.(36).

10. Display and operator control apparatus (1) according to one of the preceding claims, **characterized in that** the operator control device comprises an operator control direction operator control element and an opposite operator control direction operator control element which are arranged in the display changeover direction such that a connection vector from the opposite operator control direction operator control element to the operator control direction operator control element is oriented parallel to the display changeover direction and has an orientation which matches the display changeover direction.

11. Display and operator control apparatus (1) according to Claim 10, **characterized in that** the operator control direction operator control element and the opposite operator control direction operator control element are arranged on opposite sides of the display panel (3), as a result of which the operator control direction operator control element is in the display changeover direction of the display panel (3).

## Revendications

1. Dispositif d'affichage et de conduite (1) comprenant un dispositif d'affichage (2), une unité de commande combinée avec le dispositif d'affichage (2) pour transformer une interface utilisateur, l'interface utilisateur comprenant au moins deux contextes d'affichage et de conduite, et au moins un dispositif de conduite pour sélectionner l'un des au moins deux contextes d'affichage et de conduite, l'unité de commande commandant la représentation graphique sur une surface d'affichage (3) du dispositif d'affichage (2) des informations faisant partie du contexte sélectionné parmi les au moins deux contextes d'affichage et de conduite, de sorte que les informations faisant partie du contexte d'affichage et de conduite sélectionné sont à chaque fois perpétuellement représentées sur la surface d'affichage (3), **caractérisé en ce que** les contextes d'affichage et de conduite sont combinés entre eux dans une chaîne fermée (36), un dispositif de conduite orienté le long de la chaîne (36) existant et un souhait de conduite pour une conduite le long de la direction de conduite pouvant être détecté au moyen du dispositif de conduite, et un nouveau. contexte d'affichage et de conduite sélectionné, dont les informations associées sont représentées sur la surface d'affichage (3), étant celui des au moins deux contextes d'affichage et de conduite qui, dans la direction de conduite, est voisin du contexte d'affichage et de conduite sélectionné actuellement.

2. Dispositif d'affichage et de conduite (1) selon la revendication 1, **caractérisé en ce qu'**il est prévu un champ de représentation de contexte (20) dans lequel sont représentées les informations à propos d'exactement l'un des au moins deux contextes d'affichage et de conduite dans une représentation contextuelle dans le champ de représentation de contexte (20).

3. Dispositif d'affichage et de conduite (1) selon la revendication 1 ou 2, **caractérisé en ce qu'**il existe pour l'au moins un dispositif de conduite un dispositif de changement d'affichage et une modification de la représentation contextuelle actuelle à la nouvelle représentation contextuelle s'effectue de telle sorte que la nouvelle représentation contextuelle est décalée le long de la direction du changement d'affichage dans la surface d'affichage (3) et la représentation contextuelle actuelle est à cette occasion décalée hors de la surface d'affichage (3) également le long de la direction du changement d'affichage.

4. Dispositif d'affichage et de conduite (1) selon l'une des revendications précédentes, **caractérisé en ce qu'**il existe un champ d'identifiant de contexte (14), de préférence sur la surface d'affichage (3), dans lequel un identifiant de contexte (15, 16, 17, 18, 19) associé est affiché pour chacun des au moins deux contextes d'affichage et de conduite, l'identifiant de contexte (15, 16, 17, 18, 19) associé au contexte sélectionné actuellement étant mis en valeur visuellement.

5. Dispositif d'affichage et de conduite (1) selon l'une des revendications précédentes, **caractérisé en ce que** les identifiants de contexte (15, 16, 17, 18, 19) sont disposés dans le champ d'identifiant de contexte (14) les uns à côté des autres le long de la direction du changement d'affichage dans l'ordre dans lequel les contextes d'affichage et de conduite sont disposés les uns à côté des autres dans la chaîne (36).

6. Dispositif d'affichage et de conduite (1) selon l'une des revendications précédentes, **caractérisé en ce que** chacun des identifiants de contexte (15, 16, 17, 18, 19) est à chaque fois représenté toujours au même endroit à l'intérieur du champ d'identifiant de contexte (14).

7. Dispositif d'affichage et de conduite (1) selon l'une des revendications 1 à 5, **caractérisé en ce que** les identifiants de contexte (15, 16, 17, 18, 19), lors d'une sélection d'un nouveau contexte d'affichage et de conduite, se déplacent dans la direction du changement d'affichage par rapport à un point focal fixe qui coïncide avec la mise en valeur visuelle de l'identifiant de contexte (15, 16, 17, 18, 19) associé au contexte d'affichage et de conduite sélectionné.

8. Dispositif d'affichage et de conduite (1) selon la revendication 7, **caractérisé en ce que** l'identifiant de contexte (15, 16, 17, 18, 19) disposé en dernier le long de la direction du changement d'affichage avant la sélection d'un nouveau contexte d'affichage et de conduite est disposé en tant que premier identifiant de contexte (15, 16, 17, 18, 19) le long de la direction du changement d'affichage après le changement de la représentation.

9. Dispositif d'affichage et de conduite (1) selon l'une des revendications précédentes; **caractérisé en ce qu'**il existe une direction de conduite à l'opposé de la direction de conduite et le dispositif de conduite est configuré de telle sorte qu'il est en plus possible de détecter un souhait de conduite opposé pour une conduite le long de la direction de conduite opposée, et lors de la détection d'un souhait de conduite opposé, le nouveau contexte d'affichage et de conduite sélectionné est celui des au moins deux contextes d'affichage et de conduite qui est disposé dans la direction de conduite opposée à côté du contexte de conduite actuellement sélectionné dans la chaîne (36).

10. Dispositif d'affichage et de conduite (1) selon l'une des revendications précédentes, **caractérisé en ce que** le dispositif de conduite comprend un élément de conduite de direction de conduite et un élément de conduite de direction de conduite opposée qui sont disposés le long de la direction du changement d'affichage de telle sorte qu'un vecteur de liaison de l'élément de conduite de direction de conduite opposée vers l'élément de conduite de direction de conduite est orienté parallèlement à la direction du changement d'affichage et présente une orientation qui coïncide avec la direction du changement d'affichage.

11. Dispositif d'affichage et de conduite (1) selon la revendication 10, **caractérisé en ce que** l'élément de conduite de direction de conduite et l'élément de conduite de direction de conduite opposée sont disposés sur les côtés opposés de la surface d'affichage (3), de sorte que l'élément de conduite de direction de conduite se trouve dans la direction du changement d'affichage de la surface d'affichage (3).
